# EUROPEAN PATENT APPLICATION

(11) **EP 2 193 986 A1**
(43) Date of publication of application: **09.06.2010**
(21) Application number: 09176576.8
(22) Date of filing: 20.11.2009
(51) Int. Cl.: B62K 25/08, F16F 9/18, F16F 9/46

(54) **Shock absorber, front fork equipped with the shock absorber, and motorcycle equipped with the front fork**

(30) Priority: 02.12.2008 JP 2008307343
(71) Applicant: Yamaha Hatsudoki Kabushiki Kaisha, Iwata-shi, Shizuoka-ken 438-8501 (JP)
(72) Inventor: Kawamura, Tsunehisa, Shizuoka-ken Shizuoka 438-8501 (JP)
(74) Representative: Stöckeler, Ferdinand

(57) **Abstract**

A partition tube (23) extends in a vertical direction within a lower tube (22) and partitions the interior of the lower tube (22) into an inner oil chamber (42) and an outer oil chamber (43). A hollow rod (26) is fixed to an upper tube (21). The hollow rod (26) extends in a vertical direction from the upper tube (21) to the interior of the partition tube (23). A through-hole (52) is formed in a piston (25). The piston 25 is fitted to a lower end portion (26b) of the hollow rod (26). A space (26a) within the hollow rod (26) is in communication with the inner oil chamber (42) through the through-hole (52) of the piston (25).

## Description

### BACKGROUND OF THE INVENTION

### Field of the Invention

The present invention relates to a shock absorber, a front fork equipped with the shock absorber, and a motorcycle equipped with the front fork.

### Description of Related Art

A front fork that has left and right shock absorbers has been used widely for motorcycles. The shock absorbers are required to have a damping function for damping vibrations as well as a shock-absorbing function for absorbing shocks from road surfaces.

Conventionally, a shock absorber capable of adjusting its damping force has been known. JP 2008-020009A discloses a shock absorber in which a damping force adjusting mechanism is disposed external to an inner tube and an outer tube. This adjusting mechanism adjusts a compressing-side damping force and an expansion-side damping force. The shock absorber disclosed in JP 2008-020009A is equipped with a sub-tank, separately from the inner tube and the outer tube.

It is expected that the shock absorber according to JP 2008-020009A has the advantage that the adjusting work for the damping force is easy because the adjusting mechanism is disposed external to the inner tube and the outer tube. A problem is, however, that it requires the sub-tank, which increases the size of the shock absorber.

### SUMMARY OF THE INVENTION

The present invention has been accomplished in view of the foregoing and other problems, and it is an object of the invention to provide a shock absorber that does not require the sub-tank.
This object is achieved by a shock absorber of claim 1.

The present invention provides a shock absorber comprises: an outer tube; an inner tube slidably fitted into the outer tube; a partition tube, disposed in the inner tube so as to extend in a longitudinal direction, for partitioning the interior of the inner tube into an inner oil chamber and an outer oil chamber, the inner oil chamber and the outer oil chamber being in communication with each other; a hollow rod, a first end portion of which is fixed to the outer tube, and extending in a longitudinal direction from the outer tube to the interior of the partition tube; and a piston slidably accommodated in the partition tube and fitted to a second end portion of the hollow rod, the piston having a through-hole being formed therein and piercing therethrough in a longitudinal direction. In addition, a space within the rod is in communication with the inner oil chamber through the through-hole of the piston.

The present invention makes available a shock absorber that does not require the sub-tank. In accordance with an embodiment, the present invention provides a shock absorber having a damping-force adjusting mechanism disposed externally thereby making available a shock absorber that has a damping-force adjusting mechanism disposed externally and that does not require the sub-tank.

### BRIEF DESCRIPTION OF THE DRAWINGS

Fig. 1 is a side view of a motorcycle;
Fig. 2 is a partially enlarged side view of the motorcycle;
Fig. 3 is a cross-sectional view illustrating a shock absorber having an expansion-side damping function;
Fig. 4 is a partially enlarged cross-sectional view illustrating the shock absorber having an expansion-side damping function;
Fig. 5 is a partially enlarged cross-sectional view illustrating the shock absorber having an expansion-side damping function;
Fig. 6 is a partially enlarged cross-sectional view illustrating the shock absorber having an expansion-side damping function;
Fig. 7 shows cross-sectional views illustrating a shock absorber having a compressing-side damping function, wherein Fig. 7A shows a cross-sectional view taken along a vertical direction and Fig. 7B shows a cross-sectional view taken along line X-X in Fig. 7A;
Fig. 8 is a schematic view illustrating the operations and functions of the shock absorber having an expansion-side damping function; and
Fig. 9 is a schematic view illustrating the operations and functions of the shock absorber having a compression-side damping function.

### DETAILED DESCRIPTION OF THE INVENTION

As mentioned above, when the sub-tank is provided external to the tubes as in the conventional case, the shock absorber has an extra volume, and the structure of the shock absorber is complicated. In view of the problem, the present inventors have attempted to make use of the interior space of a hollow rod disposed in the tubes, in place of the sub-tank, and have thus accomplished the present invention. Hereinbelow, one embodiment of the present invention will be described.

### «Motorcycle»

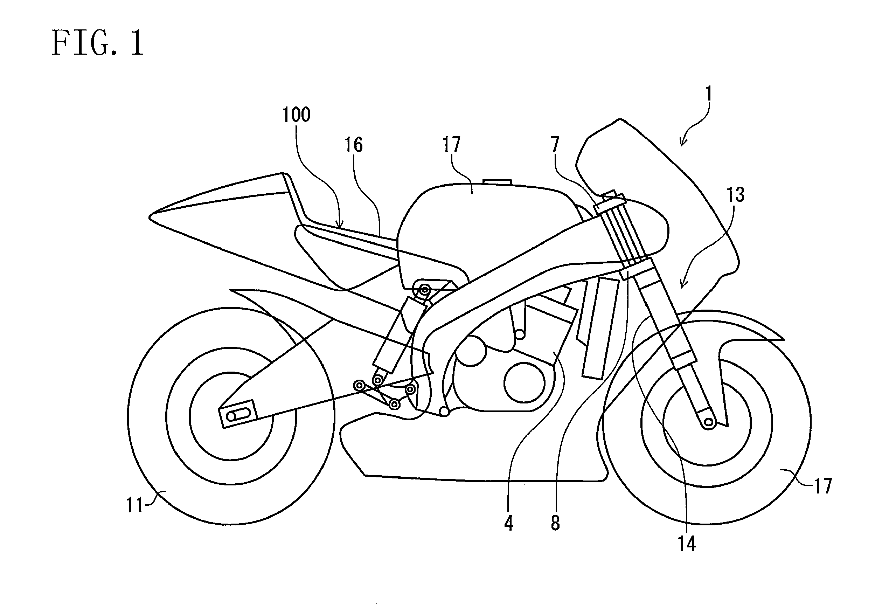

A motorcycle 1 shown in Fig. 1 is merely an example of the present invention. The motorcycle 1 may be a moped or a motor scooter. The motorcycle 1 may be an on-road type motorcycle, an on/off-road type motorcycle, or an off-road type motorcycle.

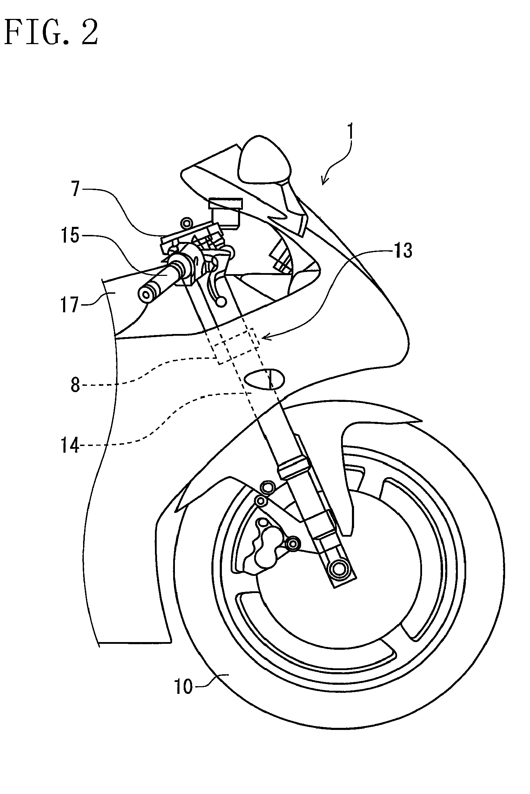

The motorcycle 1 has a body 100, a handlebar 15 (not shown in Fig. 1, see Fig. 2), a front wheel 10, and a rear wheel 11, which serves as the driving wheel. The body 100 has a fuel tank 17, a seat 16, and an engine 4.

### «Front fork»

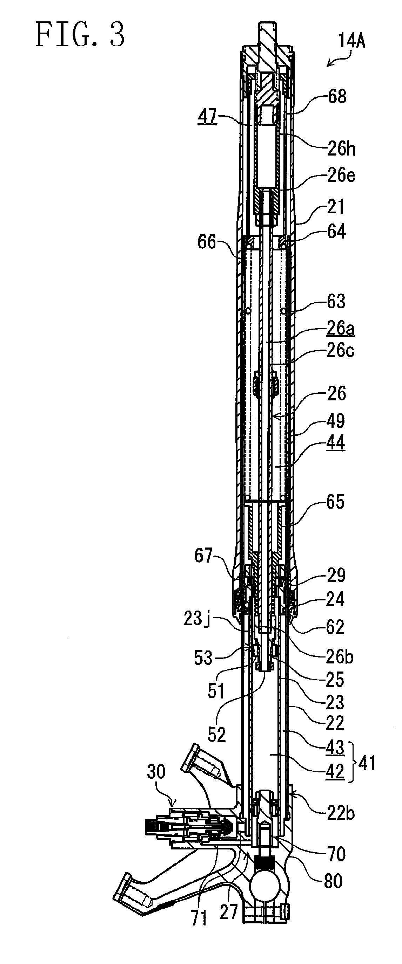

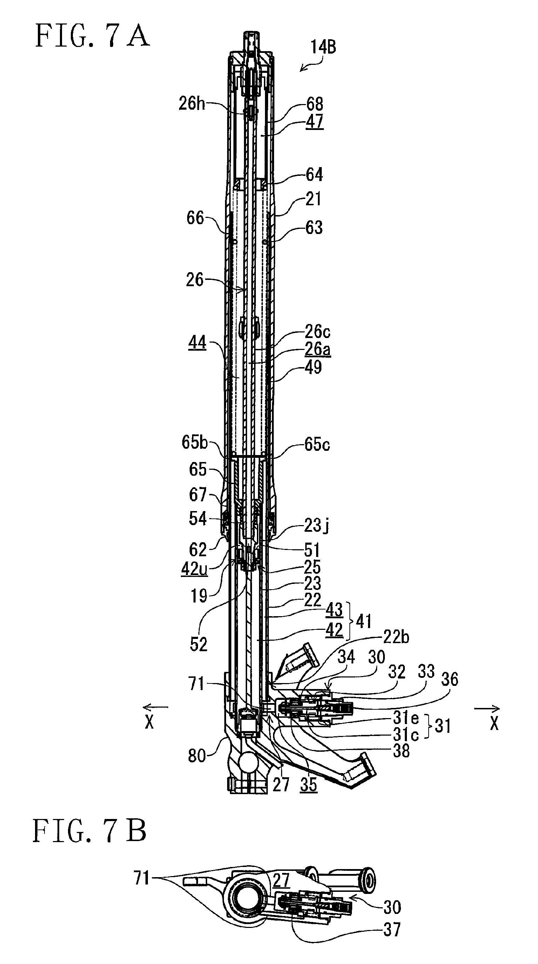

As illustrated in Figs. 1 and 2, a front fork 13 is attached to the motorcycle 1. The front fork 13 extends in a direction inclined from a vertical direction in the state in which it is mounted on the motorcycle 1. However, for the sake of convenience in illustration, the front fork 13 is illustrated as if it extends in a vertical direction in Fig. 3 and onward. The term "vertical direction" as used in the description hereinbelow is meant to be the vertical direction as shown in Fig. 3 and so forth. Likewise, in the following description, the terms "upward" and "downward" as used herein respectively mean the upward and downward directions as shown in Fig. 3 and so forth. Figs. 3 and 7 show side views illustrating the front fork 13, a portion of which is cut away. In Figs. 3 and 7, hatching for indicating cross section is partially omitted.

### «Cushion unit»

As illustrated in Figs. 1 and 2, the front fork 13 has a cushion unit 14. The cushion unit 14 has a right-side shock absorber 14A (see Fig. 3) and a left-side shock absorber 14B (see Fig. 7). The front fork 13 is provided with an upper bracket 7 and a lower bracket 8 for connecting the right-side shock absorber 14A and the left-side shock absorber 14B to each other. When the front wheel 10 receives a load from the road surface, the cushion unit 14 makes strokes in a compression direction or in a extending direction and changes its length according to the load.

### «Right-side shock absorber»

In the present embodiment, the right-side shock absorber 14A has an expansion-side damping function. As illustrated in Fig. 3, the right-side shock absorber 14A is provided with an upper tube 21, a lower tube 22, a partition tube 23, a piston 25, a check valve 53, a communication passage forming member 27, an adjusting mechanism 30, and a hollow rod 26. The upper tube 21 and the lower tube 22 are respective examples of the "outer tube" and "the inner tube" of the present invention. The lower tube 22 is slidably fitted into the upper tube 21. A dust seal 62 is provided at a lower end of the upper tube 21.

The upper tube 21 is provided outward of the outer contour of the lower tube 22. In addition, the lower tube 22 is provided inward of the inner wall of the upper tube 21. It should be noted, however, that the upper tube 21 may be provided inward of the inner wall of the lower tube 22, and the lower tube 22 may be provided outward of the outer contour of the upper tube 21.

The partition tube 23 is disposed in the lower tube 22 so as to extend vertically. The partition tube 23 partitions the interior of the lower tube 22 into an inner oil chamber 42 and an outer oil chamber 43. The inner oil chamber 42 is formed within the partition tube 23. The outer oil chamber 43 is formed between the outer wall of the partition tube 23 and the inner wall of the lower tube 22. It should be noted that hereinbelow, the inner oil chamber 42 and the outer oil chamber 43 are collectively referred to as a first oil chamber 41.

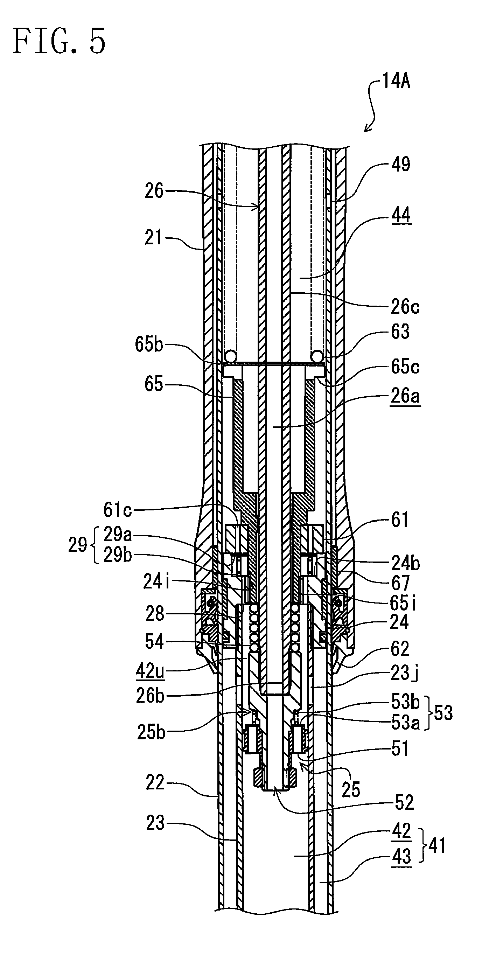

As illustrated in Fig. 5, a plug member 24 is fixed to the interior of the lower tube 22 and an upper portion of the partition tube 23 so as to plug the upper end of the first oil chamber 41. The plug member 24 has an outer contour in accordance with the inner wall of the lower tube 22. The lower tube 22 and the plug member 24 have a substantially tubular shape. A screw thread (not shown) formed in the inner peripheral surface of a lower portion of the plug member 24 and a screw thread (not shown) formed in the outer peripheral surface of an upper portion of the partition tube 23 are engaged with each other, whereby the plug member 24 is fixed to the upper portion of the partition tube 23. As illustrated in Fig. 3, a lower end of the partition tube 23 is fitted to an axle bracket 80.

A second oil chamber 44 is formed above the plug member 24 separately from the first oil chamber 41. The first oil chamber 41 and the second oil chamber 44 are separated from each other via the plug member 24. Oil is reserved in the first oil chamber 41 and the second oil chamber 44.

As illustrated in Fig. 5, a communication port 28 extending vertically is formed in the plug member 24. The right-side shock absorber 14A has a check valve 29. The check valve 29 is provided for the plug member 24. It inhibits oil from flowing upward from below through the communication port 28. The check valve 29 has at least a plate 29a and a spring 29b. The spring 29b is formed of, for example, a coil spring. The spring 29b can contract and expand between the lower face of the plate 29a and a spring abutting face 24b. The spring abutting face 24b is formed in the plug member 24.

A guide collar 61 is provided above the plate 29a. The guide collar 61 has a substantially cylindrical shape. The guide collar 61 is provided with a plurality of communication ports 61c to allow the oil to move in vertical directions. The plurality of communication ports 61c are formed at radial positions in the guide collar 61, as viewed in a vertical direction. The spring 29b of the check valve 29 urges the plate 29a upwardly from below. Thus, the plate 29a closes the communication ports 61c. However, if the pressure in the region above the plate 29a is so high as to overcome the urging force of the spring 29b, the spring 29b will contract, allowing the check valve 29 to open.

The piston 25 is accommodated slidably within the partition tube 23. In addition, the piston 25 is provided with an oil passage (or oil passages) 51 for connecting a space above the piston 25 and a space below the piston 25, and a through-hole 52 piercing through the piston 25 vertically. The through-hole 52 is formed at the center of the piston 25. The oil passages 51 are formed at radial positions outward of the through-hole 52. The piston 25 is provided with the check valve 53. The check valve 53 has a plate 53a and a spring 53b. The spring 53b is formed of, for example, a coil spring. The spring 53b can contract and expand between the upper face of the plate 53a and a retainer portion 25b formed on the piston 25. The check valve 53 is provided at the oil passages 51 of the piston 25.

The spring 53b urges the plate 53a downwardly from above. Thereby, the plate 53a closes the oil passages 51. However, for example, when the piston 25 moves downward, the spring 53b is contracted due to the increase in oil pressure in the inner oil chamber 42 resulting from the downward movement of the piston 25. Thereby, the check valve 53 permits the flow of oil flowing upward from below through the oil passages 51 of the piston 25. However, the check valve 53 inhibits the flow of oil flowing downward from above through the oil passages 51 of the piston 25.

As illustrated in Fig. 5, a communication port(s) 23j is (are) formed at a location(s) in the partition tube 23 that is (are) above the oil passages 51 of the piston 25. The communication ports 23j allow the inner oil chamber 42 and the outer oil chamber 43 to communicate with each other. As can be seen, the space above the piston 25 communicates with the outer oil chamber 43. In the interior of the partition tube 23, a space is provided between the upper face of the plate 53a of the check valve 53 and the lower end of the communication port 28. This space forms an upper oil chamber 42u. The upper oil chamber 42u is part of the inner oil chamber 42. The communication ports 23j allow the upper oil chamber 42u and the outer oil chamber 43 to communicate with each other.

The check valve 53 and the oil passages 51 are not limited to the ones provided on the piston 25. It is sufficient that the check valve 53 should be provided in the partition tube 23 so as to be movable together with the piston 25. In addition, the check valve 53 should be the one that permits flow of oil from the inner oil chamber 42 toward the outer oil chamber 43 when the piston 25 moves downward. Moreover, the check valve 53 should be the one that inhibits flow of oil from the outer oil chamber 43 toward the inner oil chamber 42 when the piston 25 moves upward.

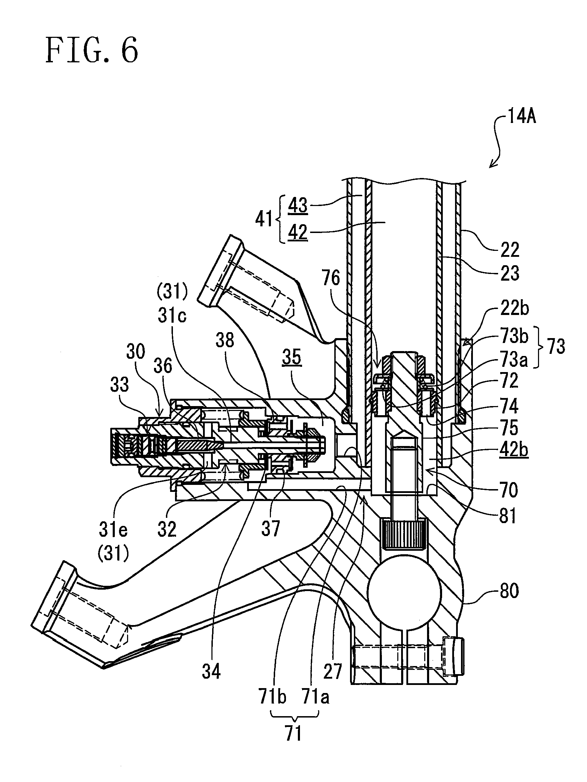

As illustrated in Fig. 6, a lower end portion 22b of the lower tube 22 is fitted to the axle bracket 80. A screw thread (not shown) formed in the inner peripheral surface of an upper portion of the axle bracket 80 and a screw thread (not shown) formed in the outer peripheral surface of the lower end portion 22b of the lower tube 22 are engaged with each other, whereby the lower end portion 22b of the lower tube 22 is fixed to the axle bracket 80.

A communication passage 71 for allowing the inner oil chamber 42 and the outer oil chamber 43 to communicate with each other is formed in the axle bracket 80. The communication passage 71 is formed in the member 27. The member 27 is a part of the axle bracket 80. The member 27 is fitted to the lower tube 22.

The communication passage 71 has an oil reserving portion 35 for reserving oil therein. The communication passage 71 includes a communication passage 71a for allowing the oil reserving portion 35 and the outer oil chamber 43 to communicate with each other and a communication passage 71b for allowing the oil reserving portion 35 and the inner oil chamber 42 to communicate with each other.

The adjusting mechanism 30 is disposed in the communication passage 71. As mentioned above, the communication passage 71 is formed in the member 27, and the member 27 is a part of the axle bracket 80. The axle bracket 80 is a separate part from the lower tube 22. The axle bracket 80 is provided external to the lower tube 22, and is fitted to the lower tube 22. Accordingly, the adjusting mechanism 30 is provided external to the lower tube 22. As illustrated in Fig. 3, the adjusting mechanism 30 is provided also external to the upper tube 21.

As illustrated in Fig. 6, an orifice passage 31 is provided in the member 27. When oil passes through the orifice passage 31, the flow of the oil is narrowed, so a damping force is generated in the right-side shock absorber 14A. The damping force at this time is a damping force that works when the right-side shock absorber 14A expands.

The orifice passage 31 is formed in the orifice member 32. The orifice member 32 has a shaft-like shape. The orifice member 32 has a first orifice passage 31c extending axially and a second orifice passage 31e extending in a radial direction.

A throttle mechanism 33 is attached to the orifice member 32. The throttle mechanism 33 has a needle 36. The needle 36 is provided at a foremost end of the throttle mechanism 33. The needle 36 extends in the same direction as the direction in which the first orifice passage 31c extends. The needle 36 faces the opening of the first orifice passage 31c. The needle 36 moves in an axial direction, whereby the amount of opening of the first orifice passage 31c changes. Thereby, the speed of the oil that passes through the orifice passage 31 changes so that the damping force of the right-side shock absorber 14A is adjusted.

The orifice member 32 is provided with a port 38. The port 38 is formed in a piston 37. The piston 37 is a part of the orifice member 32. The port 38 is disposed outward of the first orifice passage 31c with respect to a radial direction of the orifice member 32.

The port 38 is provided with a pressure valve 34. The pressure valve 34 closes the port 38 when the differential pressure between the outer oil chamber 43 and the inner oil chamber 42 is below a predetermined value. On the other hand, the pressure valve 34 opens the port 38 when the differential pressure between the outer oil chamber 43 and the inner oil chamber 42 becomes equal to or greater than the predetermined value. For example, when the sliding speed of the piston 25 relative to the partition tube 23 is equal to or greater than a predetermined speed, the differential pressure between the outer oil chamber 43 and the inner oil chamber 42 becomes equal to or greater than a predetermined value. When the port 38 is open, oil can pass through both the orifice passage 31 and the port 38.

As illustrated in Fig. 3, the right-side shock absorber 14A has a cushion spring 63. The cushion spring 63 is formed of, for example, a coil spring. The cushion spring 63 is disposed within the lower tube 22. The right-side shock absorber 14A has an upper spring holder 64 and a lower spring holder 65. The cushion spring 63 extends in a vertical direction between the upper spring holder 64 and the lower spring holder 65.

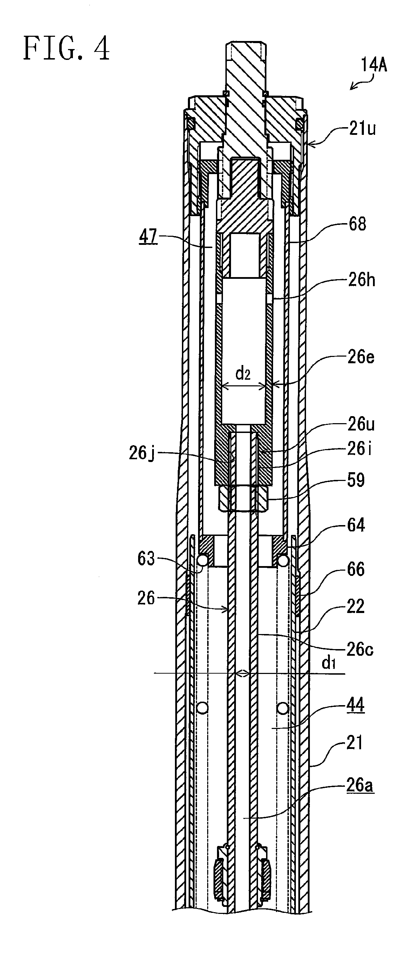

As illustrated in Fig. 4, the upper spring holder 64 is fitted to the lower end of a supporting tube 68. The supporting tube 68 is provided inward of the upper tube 21. The upper end of the supporting tube 68 is fixed to an upper end portion 21u of the upper tube 21. Thus, the position of the upper spring holder 64 is determined relative to the upper tube 21. The upper end of the cushion spring 63 is in contact with the upper spring holder 64. It should be noted that the outer diameter of the supporting tube 68 is smaller than the inner diameter of the lower tube 22.

As illustrated in Fig. 5, the lower spring holder 65 is fitted to the plug member 24. A screw thread 24i formed in the inner peripheral surface of a portion of the plug member 24 and a screw thread 65i formed in the outer peripheral surface of a lower portion of the lower spring holder 65 are engaged with each other, whereby the lower spring holder 65 is fixed to the plug member 24.

The lower spring holder 65 has a spring contact portion 65b. The lower end of the cushion spring 63 is in contact with the spring contact portion 65b. The cushion spring 63 contracts and expands between the upper spring holder 64 and the lower spring holder 65 when the right-side shock absorber 14A makes strokes.

A plurality of holes 65c are provided in the spring contact portion 65b. The plurality of holes 65c are formed at radial positions, as viewed in a vertical direction. When the cushion spring 63 contracts or expands, the oil in the second oil chamber 44 moves upward and downward of the spring contact portion 65b through the holes 65c. A rebound spring 54 is provided below the lower spring holder 65 and above the piston 25.

As illustrated in Fig. 3, the rod 26 is of substantially tubular shape having a space 26a formed therein. The rod 26 is fixed to the upper tube 21. The rod 26 extends in a vertical direction from the upper tube 21 to the interior of the partition tube 23. The rod 26 comprises a rod body 26c and an oil reservoir 26e. A communication passage(s) 26h is (are) provided at a position(s) further above the position at which the plug member 24 of the rod 26 is disposed. In the right-side shock absorber 14A, the rod 26 pierces through the plug member 24 (see Fig. 5).

As illustrated in Fig. 4, the oil reservoir 26e is connected to an upper portion of the rod body 26c. The oil reservoir 26e has a cylindrical shape. The inner diameter d₂ of the oil reservoir 26e is greater than the inner diameter d₁ of the rod body 26c. The oil reservoir 26e reserves the oil that moves upward in the space 26a within the rod 26.

As will be described later, when the piston 25 (see Fig. 3) moves downward, a portion of the oil in the inner oil chamber 42 moves into the oil reservoir 26e through the space 26a. At this time, flow resistance occurs in the oil that moves in the space 26a. The flow resistance becomes greater when the inner diameter of the space 26a is smaller, and it also becomes greater when the length of the space 26a (i.e., the length of the rod body 26c) is longer.

A screw thread 26j is formed in an inner side of a lower portion of the oil reservoir 26e. In addition, a screw thread 26i is formed in an outside of an upper end portion 26u of the rod body 26c. The screw thread 26i and the screw thread 26j are engaged with each other, whereby the rod body 26c and the oil reservoir 26e are connected to each other. Moreover, a nut 59 is fitted onto the screw thread 26i. The nut 59 is fastened to the rod body 26c, whereby the oil reservoir 26e is fixed to the rod body 26c at a predetermined vertical position.

The upper end of the oil reservoir 26e is fixed to the upper end portion 21u of the upper tube 21. In addition, as illustrated in Fig. 5, the piston 25 is fitted to a lower end portion 26b of the rod 26, and the piston 25 and the rod 26 are fixed to each other. The space 26a within the rod 26 faces the inner oil chamber 42 through a through-hole 52 of the piston 25. In other words, the space 26a is in communication with the inner oil chamber 42 via the through-hole 52.

When the lower tube 22 slides against the upper tube 21, the length of the right-side shock absorber 14A changes. When the lower tube 22 slides against the upper tube 21, the piston 25 moves within the partition tube 23. As illustrated in Fig. 5, when the lower tube 22 slides against the upper tube 21, the piston 25 moves in a vertical direction within the partition tube 23 because the piston 25 and the rod 26 are fixed to each other.

As illustrated in Fig. 4, the communication passages 26h extend in radial directions in the oil reservoir 26e so as to allow the interior and the exterior of the oil reservoir 26e to communicate with each other. As a result, the oil of the first oil chamber 41 that moves upward in the space 26a of the rod 26 flows out of the oil reservoir 26e through the communication passages 26h in an amount that exceeds a predetermined amount. The oil that has flowed out of the oil reservoir 26e through the communication passages 26h flows into the second oil chamber 44.

As illustrated in Fig. 6, the right-side shock absorber 14A has an adjusting mechanism 70. The adjusting mechanism 70 adjusts the differential pressure between a lower oil chamber 42b and the inner oil chamber 42. The adjusting mechanism 70 has a boss 75, a collar 72, and a check valve 73. The adjusting mechanism 70 is disposed in the partition tube 23. The boss 75 is formed in a shaft-like shape. The boss 75 extends in a vertical direction. The boss 75 is fixed to the axle bracket 80 at a position lower than the position at which the partition tube 23 is fitted.

The collar 72 has a substantially cylindrical shape. The collar 72 is fitted on the outer radial peripheral side of the boss 75. The outer diameter of the collar 72 is substantially the same as the inner diameter of the partition tube 23. The inner oil chamber 42 is vertically separated by the collar 72. Of the inner oil chamber 42, the oil chamber positioned below the collar 72 is referred to as the lower oil chamber 42b. The lower oil chamber 42b is a space formed between an end face 81 of the axle bracket 80 and the collar 72.

Communication ports 74 are provided in the collar 72 so that the lower oil chamber 42b and the oil chamber above the collar 72 can communicate with each other. The communication ports 74 extend in a vertical direction. The plurality of communication ports 74 are formed at radial positions, as viewed in a vertical direction.

The lower oil chamber 42b of the inner oil chamber 42 is allowed to communicate with the outer oil chamber 43 via the communication passage 71. When an oil chamber of the inner oil chamber 42 that is above the collar 72 is at a lower pressure than the lower oil chamber 42b, the oil in the lower oil chamber 42b moves upward from the region below the collar 72 through the communication ports 74.

The check valve 73 has a plate 73a and a spring 73b. The spring 73b is formed of, for example, a coil spring. The spring 73b can contract and expand between the upper face of the plate 73a and a retainer member 76. The retainer member 76 is disposed above the plate 73a.

The spring 73b urges the plate 73a downwardly from above. Thus, the plate 73a closes the top of the communication ports 74. However, if the pressure in the lower oil chamber 42b is so high as to overcome the urging force of the spring 73b, the spring 73b will contract, so that the check valve 73 permits the flow of oil flowing upward from below through the communication ports 74. However, the check valve 73 inhibits the flow of oil flowing downward from above through the communication ports 74.

As illustrated in Fig. 5, the right-side shock absorber 14A is provided with a hole 49. The right-side shock absorber 14A has an upper slide metal 66 (see Fig. 4) and a lower slide metal 67 (see Fig. 5) between the inside of the upper tube 21 and the outside of the lower tube 22. The space between the inside of the upper tube 21 and the outside of the outer contour of the lower tube 22 is in communication with the second oil chamber 44 via the hole 49. The just-mentioned space is filled with oil so that the upper tube 21 and the lower tube 22 are lubricated when the lower tube 22 slides against the upper tube 21.

### «Left-side shock absorber»

Next, the left-side shock absorber 14B will be described below. The left-side shock absorber 14B has a compressing-side damping function. It should be noted that, in the following description, the same parts and components as those in the right-side shock absorber 14A will be denoted by the same reference numerals, and further description will be omitted.

As illustrated in Fig. 7A, the left-side shock absorber 14A has a check valve 19. The check valve 19 is provided on the piston 25. The check valve 19 permits the flow of oil flowing downward from above in the oil passages 51, and it inhibits the flow of oil flowing upward from below therein. It should be noted, however, that the check valve 19 is not limited to the one provided on the piston 25. Also, the oil passages 51 are not limited to those provided in the piston 25.

In the left-side shock absorber 14B, the communication passages 26h of the rod 26 allow the inside and outside of the rod body 26c to communicate with each other. As a result, the oil of the first oil chamber 41 that moves upward in the space 26a within the rod 26 flows out of the rod body 26c through the communication passages 26h in an amount that exceeds a predetermined amount. The communication passages 26h are disposed at relatively high positions in the upper tube 21. In the left-side shock absorber 14B of the present embodiment, the communication passages 26h are disposed at higher positions than the upper spring holder 64.

No plug member is provided in the left-side shock absorber 14B, so the upper end of the inner oil chamber 42 and the upper end of the outer oil chamber 43 are not plugged. In the left-side shock absorber 14B, the position of the upper end of the outer oil chamber 43 is the position at which the spring contact portion 65b of the lower spring holder 65 is disposed, and the position of the lower end of the outer oil chamber 43 is the position of the lower end of the lower tube 22. In addition, in the left-side shock absorber 14B, the upper end of the inner oil chamber 42 is at the position of the lower end of the lower spring holder 65, and the lower end of the inner oil chamber 42 is at the position of the lower end of the partition tube 23. Furthermore, in the left-side shock absorber 14B, a space is provided between the lower end of the lower spring holder 65 and the upper end of the oil passages 51. This space forms the upper oil chamber 42u. In the regions above and below the spring contact portion 65b, the outer oil chamber 43 and the second oil chamber 44 are allowed to communicate with each other by the holes 65c. Likewise, the inner oil chamber 42 and the second oil chamber 44 are allowed to communicate with each other by the holes 65c.

### « Operation of the right-side shock absorber»

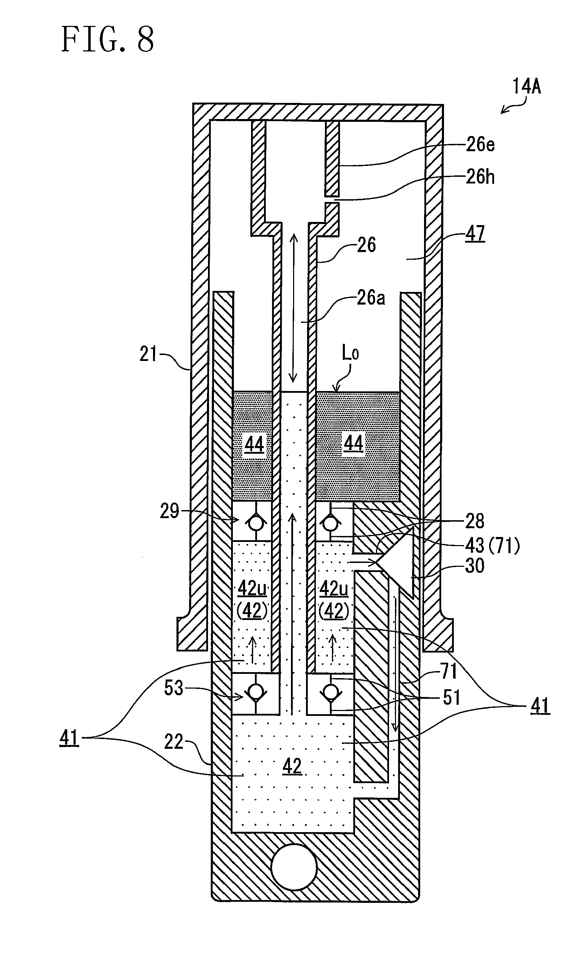

Fig. 8 is a view schematically illustrating the operations and functions of the right-side shock absorber 14A. The arrows in the figure indicate the directions of movement of the oil. Reference character L₀ denotes the oil level at the time when the right-side shock absorber 14A is not operating. A space 47 filled with air is formed in a region above the second oil chamber 44.

In the following, the operations of the right-side shock absorber 14A will be described with reference to Figs. 8 and 5. When the right-side shock absorber 14A makes a stroke in a compression direction, the length of the right-side shock absorber 14A reduces. At this moment, the piston 25 (see Fig. 5) provided in the right-side shock absorber 14A moves downward within the partition tube 23.

When the piston 25 moves downward, the oil in the first oil chamber 41 passes through the through-hole 52 of the piston 25 and moves upward through the space 26a of the rod 26. The oil that has moved upward is reserved in the oil reservoir 26e. When the piston 25 moves downward, a portion of the oil in the inner oil chamber 42 passes through the oil passages 51, the upper oil chamber 42u, and the communication ports 23j, and flows into the outer oil chamber 43. When the piston 25 moves downward, the oil in the outer oil chamber 43 cannot flow into the inner oil chamber 42 through the oil passages 51. Therefore, the pressure in the outer oil chamber 43 becomes higher than the pressure in the inner oil chamber 42. However, the oil reserved in the outer oil chamber 43 can flow into the inner oil chamber 42 (more specifically, the lower oil chamber 42b (see Fig. 5)) through the communication passage 71. As a result, the balance of the pressures between the inner oil chamber 42 and the outer oil chamber 43 can be maintained.

When the amount of the oil flowing into the oil reservoir 26e exceeds a predetermined amount, a portion of the oil flowing into the oil reservoir 26e flows out of the oil reservoir 26e through the communication passages 26h. When the amount of the oil flowing out of the oil reservoir 26e increases, the pressures in the second oil chamber 44 and the space 47 become high. However, a portion of the oil reserved in the second oil chamber 44 that is at a high pressure flows out to the first oil chamber 41 that is at a low pressure (more specifically, to the upper oil chamber 42u of the inner oil chamber 42) via the check valve 29. Thereby, the balance between the pressures in the first oil chamber 41 and the second oil chamber 44 is maintained.

The oil that has flowed into the oil reservoir 26e passes through the space 26a of the rod 26 when the piston 25 move upward, and is again reserved in the inner oil chamber 42.

### « Operation of the left-side shock absorber»

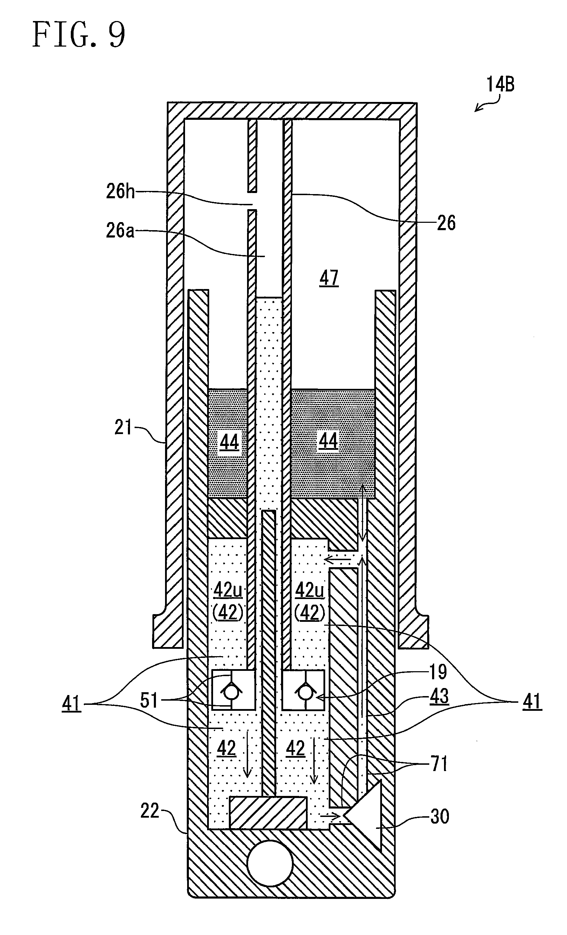

Next, the operations of the left-side shock absorber 14B will be described with reference to Figs. 9 and 7. Fig. 9 is a view schematically illustrating the operations and functions of the left-side shock absorber 14B.

When the left-side shock absorber 14B makes a stroke in a compression direction, the length of the right-side shock absorber 14B reduces. At this time, the piston 25 (see Fig. 7A) provided in the left-side shock absorber 14B moves downward within the partition tube 23. When the piston 25 moves downward, the check valve 19 closes the oil passages 51. When the piston 25 moves downward, the oil in the inner oil chamber 42 moves to the adjusting mechanism 30 through the communication passage 71. At this moment, the flow is narrowed by the orifice passage 31, whereby a damping force of the left-side shock absorber 14B is generated.

When the piston 25 moves downward, a portion of the oil in the first oil chamber 41 passes through the communication passage 71, the adjusting mechanism 30, and the outer oil chamber 43, and flows into the second oil chamber 44. In addition, when the piston 25 moves downward, a portion of the oil in the inner oil chamber 42 is discharged to the space 26a of the rod 26 through the through-hole 52, while when the piston 25 moves upward, the portion of the oil returns to the inner oil chamber 42 from the space 26a. In the case that the amount of the oil discharged into the space 26a from the inner oil chamber 42 when the piston 25 moves downward exceeds a predetermined amount, a portion of the oil flows into the second oil chamber 44 through the communication passages 26h (see Fig. 7A).

When oil flows into the second oil chamber 44, the pressures in the space 47, the second oil chamber 44, and the upper oil chamber 42u become high. However, when the pressures in the space 47, the second oil chamber 44, and the upper oil chamber 42u become high, the check valve 19 opens the oil passages 51. As a result, the oil in the upper oil chamber 42u flows into the region below the piston 25 through the oil passages 51. Thereby, the balance between the pressures in the first oil chamber 41 and the second oil chamber 44 is maintained.

### «Advantageous Effects of the Embodiment»

In each of the right-side shock absorber 14A and the left-side shock absorber 14B according to the present embodiment, the adjusting mechanism 30 for adjusting damping force is disposed external to the upper tube 21 and the lower tube 22 (see Figs. 3 and 7A). For this reason, the right-side shock absorber 14A and the left-side shock absorber 14B according to the present embodiment can adjust damping force more easily than the conventional shock absorber in which the adjusting mechanism is disposed in the upper tube or the lower tube.

In each of the right-side shock absorber 14A and the left-side shock absorber 14B, the oil reserved in the first oil chamber 41 passes through the orifice passage 31 in association with movement of the piston 25. At this moment, the flow is narrowed by the orifice passage 31, whereby a damping force is generated in each of the right-side shock absorber 14A and the left-side shock absorber 14B.

The volume occupied by the piston 25 and the rod 26 within the inner oil chamber 42 decreases as the piston 25 moves upward. On the other hand, the volumetric capacity of the inner oil chamber 42 increases as the piston 25 moves upward. However, when the piston 25 moves upward, oil is supplied from the space 26a to the inner oil chamber 42 through the through-hole 52 of the piston 25. Therefore, the decrease of pressure in the inner oil chamber 42 is inhibited.

The volume occupied by the piston 25 and the rod 26 within the inner oil chamber 42 increases as the piston 25 moves downward. On the other hand, the volumetric capacity of the inner oil chamber 42 decreases as the piston 25 moves downward. However, when the piston 25 moves downward, a portion of the oil in the inner oil chamber 42 is discharged into the space 26a of the rod 26 through the through-hole 52 of the piston 25. Therefore, the increase of pressure in the inner oil chamber 42 is inhibited.

Thus, the volumetric capacity of the inner oil chamber 42 changes in association with the vertical movement of the piston 25. However, oil can travel between the space 26a and the inner oil chamber 42 because the space 26a of the rod 26 is in communication with the inner oil chamber 42. Therefore, excess and shortage of oil in the inner oil chamber 42 can be avoided. In other words, oil can flow back and forth within the upper tube 21 and the lower tube 22 in either case where each of the right-side shock absorber 14A and the left-side shock absorber 14B expands or contracts. Therefore, the right-side shock absorber 14A and the left-side shock absorber 14B according to the present embodiment do not require a sub-tank to be provided external to the upper tube 21 and the lower tube 22. Accordingly, the present invention makes available the shock absorbers 14A and 14B each of which has the adjusting mechanism 30 disposed externally but does not require the sub-tank.

The check valve 53 is provided in the partition tube 23 of the right-side shock absorber 14A. When the right-side shock absorber 14A contracts, the piston 25 moves downward from above, and the check valve 53 permits the flow of oil from the inner oil chamber 42 toward the outer oil chamber 43. This inhibits the oil in the inner oil chamber 42 from flowing into the outer oil chamber 43 through the orifice passage 31. Therefore, when the right-side shock absorber 14A is compressed, the flow of the oil is not narrowed by the orifice passage 31, and no damping force is generated in the right-side shock absorber 14A. On the other hand, when the right-side shock absorber 14A expands, the piston 25 moves upward from below, and the check valve 53 inhibits the flow of oil from the outer oil chamber 43 toward the inner oil chamber 42. This causes the oil in the outer oil chamber 43 to flow into the inner oil chamber 42 through the orifice passage 31. Therefore, when the right-side shock absorber 14A expands, the flow of oil is narrowed by the orifice passage 31, and a damping force is generated in the right-side shock absorber 14A. Thereby, it is possible to obtain a shock absorber that does not generate a damping force when it is compressed and generates a damping force only when it expands.

In the case that the second oil chamber 44 and the first oil chamber 41 are completely isolated from each other by the plug member 24, the pressure in the first oil chamber 41 may greatly reduce at the time when the oil reserved in the first oil chamber 41 flows out to a region above the plug member 24 through the space 26a in a significant amount. In that case, the pressure in the space above the plug member 24 (i.e., the second oil chamber 44) becomes higher than the pressure in the space below the plug member 24 (i.e., the first oil chamber 41). However, in the right-side shock absorber 14A, the check valve 29 opens if the pressure of the second oil chamber 44 is higher than that in the first oil chamber 41. As a result, oil flows from the second oil chamber 44 into the first oil chamber 41 through the communication port 28 (see Fig. 5), inhibiting the pressure in the first oil chamber 41 from decreasing.

When the right-side shock absorber 14A expands, the piston 25 moves upward, and the check valve 53 closes the oil passages 51. When the right-side shock absorber 14A is compressed, the piston 25 moves downward, and the check valve 53 opens the oil passages 51. The communication ports 23j for allowing the upper oil chamber 42u of the inner oil chamber 42 and the outer oil chamber 43 to communicate with each other are formed at a portion of the partition tube 23 above the oil passages 51. Thereby, when the shock absorber is compressed, the oil that has flowed into the upper oil chamber 42u through the oil passages 51 can be smoothly discharged to the outer oil chamber 43 through the communication ports 23j. This inhibits unnecessary damping force from being generated when the shock absorber is compressed.

The rod 26 comprises a rod body 26c and an oil reservoir 26e. Oil flows through the space 26a of the rod 26 in association with expansion or contraction of the right-side shock absorber 14A. At this time, flow resistance occurs in the space 26a. This flow resistance becomes greater when the inner diameter of the rod 26 is smaller. However, in the right-side shock absorber 14A, the inner diameter d₂ of the oil reservoir 26e is greater than the inner diameter d₁ of the rod body 26c. Accordingly, the average inner diameter of the rod 26 as a whole is greater than the inner diameter d₁ of the rod body 26c. Therefore, according to the present embodiment, the flow resistance of the oil inside the rod 26 can be reduced. In addition, the length of the rod body 26c can be reduced according to the inner diameter d₂ of the oil reservoir 26e.

Of the right-side shock absorber 14A and the left-side shock absorber 14B, the right-side shock absorber 14A has an expansion-side damping function only, while the left-side shock absorber 14B has a compressing-side damping function only. In the front fork 13 according to the present embodiment, the expansion-side damping force and the compressing-side damping force can be adjusted independently. As a result, the damping force can be adjusted easily.

Both the right-side shock absorber 14A and the left-side shock absorber 14B do not have the sub-tank, so their structures are simple. The front fork 13 according to the present embodiment can be fitted to the body 100 of the motorcycle 1 easily.

The pressure valve 34 of the adjusting mechanism 30 is provided at the port 38. The pressure valve 34 opens the port 38 when the differential pressure between the outer oil chamber 43 and the inner oil chamber 42 becomes equal to or greater than a predetermined value, while it closes the port 38 when the differential pressure is less than a predetermined value. When the pressure valve 34 closes the port 38, the oil reserved in the first oil chamber 41 passes exclusively through the orifice passage 31, without passing through the port 38. In this case, appropriate damping characteristics can be obtained when the lengths of the right-side shock absorber 14A and the left-side shock absorber 14B changes relatively slowly. On the other hand, the pressure valve 34 opens the port 38 when the differential pressure between the outer oil chamber 43 and the inner oil chamber 42 is equal to or greater than a predetermined value. As a result, the oil reserved in the first oil chamber 41 passes through the orifice passage 31 and the port 38. In this case, appropriate damping characteristics can be obtained when the lengths of the right-side shock absorber 14A and the left-side shock absorber 14B changes relatively fast.

### <Other Embodiments>

In the foregoing embodiment, the right-side shock absorber 14A is described to have an expansion-side damping function only. However, it is possible that the right-side shock absorber 14A may have a compressing-side damping function only, not the expansion-side damping function. It is also possible that the right-side shock absorber 14A may be constructed by a shock absorber that has a compressing-side damping function only and the left-side shock absorber 14B may be constructed by a shock absorber that has an expansion-side damping function only.

## Claims

1. A shock absorber (14A, 14B) comprising:
an outer tube (21);
an inner tube (22) slidably fitted into the outer tube (21);
a partition tube (23), disposed in the inner tube (22) so as to extend in a longitudinal direction, for partitioning the interior of the inner tube (22) into an inner oil chamber (42) and an outer oil chamber (43), the inner oil chamber (42) and the outer oil chamber (43) being in communication with each other;
a hollow rod (26) having a first end portion (26u) fixed to the outer tube (21) and extending in a longitudinal direction from the outer tube (21) to the interior of the partition tube (23); and
a piston (25) slidably accommodated in the partition tube (23) and fitted to a second end portion (26b) of the hollow rod (26), the piston (25) having a through-hole (52) being formed therein and piercing therethrough in a longitudinal direction,
wherein a space (26a) within the hollow rod (26) is in communication with the inner oil chamber (42) through the through-hole (52) of the piston (25).

2. The shock absorber (14A) according to claim 1, further comprising:
a first check valve (53) provided movably within the partition tube (23) together with the piston (25), for permitting a flow of oil from the inner oil chamber (42) toward the outer oil chamber (43) when the piston (25) moves in a first direction that is a direction from the first end portion (26u) side of the hollow rod (26) toward the second end portion (26b) side of the hollow rod (26) and inhibiting a flow of oil from the outer oil chamber (43) toward the inner oil chamber (42) when the piston (25) moves in a second direction that is an opposite direction to the first direction.

3. The shock absorber (14A) according to claim 2, further comprising:
a plug member (24), fixed to an interior of the inner tube (22) and to the partition tube (23) so as to plug the upper ends of the inner oil chamber (42) and the outer oil chamber (43);
wherein the hollow rod (26) pierces through the plug member (24) in a longitudinal direction;
another oil chamber (44) being different from the inner oil chamber (42) and the outer oil chamber (43) and formed within the outer tube (21) and above the plug member (24);
a communication passage (26h) for allowing a communication between the interior space (26a) of the hollow rod (26) and the other oil chamber (44), the communication passage (26h) being provided at a portion of the hollow rod (26) that is closer to the first end portion (26u) of the hollow rod (26) than a position at which the plug member (24) is disposed; and
wherein the plug member (24) has a communication port (28) formed therein that extends in a longitudinal direction, and the plug member (24) is provided with a second check valve (29) for permitting a flow of oil flowing in the first direction through the communication port (28) and inhibiting flow of oil flowing in the second direction.

4. The shock absorber (14A) according to claim 2, wherein:
the piston (25) has an oil passage (51) formed therein for connecting a first space above the piston (25) and a second space below the piston (25);
a communication port (23j) for allowing a communication between the inner oil chamber (42) and the outer oil chamber (43), the communication port (23j) being formed at a portion of the partition tube (23) that is above the oil passage (51) of the piston (25); and
the piston (25)is provided with the first check valve (53) to permit the flow of oil flowing in the second direction through the oil passage (51) and to inhibit the flow of oil flowing in the first direction.

5. The shock absorber (14A) according to claim 2, wherein the hollow rod (26) has a hollow rod body (26c), and an oil reservoir (26e) connected to the hollow rod body (26c) at the first end portion (26u) of the hollow rod (26), the oil reservoir (26e) having an inside diameter (d₂) greater than an inside diameter (d₁) of the hollow rod body (26c).

6. The shock absorber (14A,14B) according to claim 1, further comprising:
a communication passage forming member (27), fitted to the inner tube (22), having a communication passage (71) for allowing the inner oil chamber (42) and the outer oil chamber (43) to communicate with each other; and
a damping-force adjusting mechanism (30), disposed in the communication passage (71), having an orifice member (32) in which an orifice passage (31) is formed and a throttle mechanism (33) with which a throttling amount of the orifice passage (31) can be adjusted.

7. The shock absorber (14A,14B) according to claim 6, wherein:
the orifice member (32) of the adjusting mechanism (30) has another orifice passage (38) formed therein; and
the adjusting mechanism (30) further has a pressure valve (34) that opens when a differential pressure between the outer oil chamber (43) and the inner oil chamber (42) becomes equal to or greater than a predetermined value, the pressure valve (34) being provided for the other orifice passage (38).

8. A front fork (13) comprising:
a pair of shock absorbers (14A,14B), the a pair of shock absorbers (14A,14B) comprising a left shock absorber and a right shock absorber,
one of the shock absorbers (14A,14B) being a shock absorber (14A) according to claim 2, and
the other one (14B) of the shock absorbers being a shock absorber (14A) according to claim 1 that further comprises:
a communication port (23j) formed in the partition tube (23) for allowing the inner oil chamber (42) and the outer oil chamber (43) to communicate with each other; and
a third check valve (19) provided movably within the partition tube (23) together with the piston (25), for permitting a flow of oil from the outer oil chamber (43) toward the inner oil chamber (42) through the communication port (23j) when the piston (25) moves in the second direction and inhibiting a flow of oil from the inner oil chamber (42) toward the outer oil chamber (43) when the piston (25) moves in the first direction.

9. A motorcycle (1) comprising a front fork (13) according to claim 8.
